## Europäisches Patentamt

## European Patent Office

## Office européen des brevets

(19)

(11) Veröffentlichungsnummer: **0 064 474**
**B1**

(12) # EUROPÄISCHE PATENTSCHRIFT

(45) Veröffentlichungstag der Patentschrift:
06.11.85

(51) Int. Cl.⁴: **B 01 D 39/20,** B 01 D 29/04,
C 22 B 9/02

(21) Anmeldenummer: **82810095.8**

(22) Anmeldetag: **04.03.82**

(54) **Keramischer Filter zur Filtration von schmelzflüssigen Metallen und Verfahren zu dessen Herstellung.**

(30) Priorität: **19.03.81 US 245503**

(43) Veröffentlichungstag der Anmeldung:
**10.11.82 Patentblatt 82/45**

(45) Bekanntmachung des Hinweises auf die Patenterteilung:
**06.11.85 Patentblatt 85/45**

(84) Benannte Vertragsstaaten:
**AT BE CH DE FR GB IT LI NL SE**

(56) Entgegenhaltungen:
**DE - A - 2 128 316**
**US - A - 3 090 094**
**US - A - 3 893 917**
**US - A - 3 947 363**
**US - A - 3 962 081**
**US - A - 4 081 371**
**US - A - 4 179 102**

(73) Patentinhaber: **SCHWEIZERISCHE ALUMINIUM AG,
CH-3965 Chippis (CH)**

(72) Erfinder: **Brockmeyer, Jerry W., Route 9 Box 69,
Hendersonville North Carolina 28739 (US)**

## Beschreibung

Geschmolzenes Metall, insbesondere geschmolzenes Aluminium, enthält immer Festkörper, die sich in einem fertigen Gussstück störend auswirken. Diese Festkörper erscheinen als Einschlüsse im Gussstück, nachdem das geschmolzene Metall wieder erstarrt ist und bewirken eine verminderte Duktilität oder einen schlechten Oberflächenglanz und eine schlechtere Anodisiercharakteristik. Die Einschlüsse können von verschiedenen Quellen stammen. Beispielsweise von Oberflächenfilmen aus oxidischem Material, die aufbrechen und ins schmelzflüssige Metall gelangen. Zusätzlich können die Einschlüsse aus unlöslichen Verunreinigungen, wie Karbiden, Boriden und anderen Verbindungen bestehen oder es sind mitgerissene Teilchen der Ofen- oder Transportkanalauskleidung. Poröse keramische Schaummaterialien sind bekannt als besonders geeignet, um schmelzflüssiges Metall zu filtrieren. Die Gründe dafür sind beispielsweise der ausgezeichnete Filtriereffekt, niedrige Kosten, leichte Anwendbarkeit und die Möglichkeit des Einweggebrauchs der Filter. Derartige Materialien sind beispielsweise beschrieben in den US-PS 3 893 917, 3 947 363 und 4 081 371. Die Tatsache, dass derartige keramische Filter leicht und billig herzustellen und auf Basis eines einmaligen Gebrauchs ausgerichtet sind, verlangte die Entwicklung einer Filtriervorrichtung, die es erlaubt, die keramischen Filter schnell und auf einfache Weise einzusetzen und auszuwechseln.

Der einmalige Gebrauch der Filter verlangt vor allem wirksame Vorkehrungen, um den Filter auf einfache Weise in die Filtriervorrichtung einzusetzen, darin sicher festzuhalten, wieder auszubauen und schliesslich um die Vorrichtung reinigen zu können. Die Aufnahmevorrichtung für den Filter oder die Filterkammer als ganzes ist gewöhnlich ein fester Bestandteil eines Giesstroges, einer Giesspfanne oder Giesswanne usw. und muss aus feuerfestem Material, wie es üblicherweise für Giesstrogkonstruktionen verwendet wird, gebaut sein, wobei die Beständigkeit des feuerfesten Materials gegenüber schmelzflüssigen Metallen vorausgesetzt werden muss.

Der Filter wird normalerweise in rechteckiger Plattenform, mit ebener Grund- und Deckfläche und mit zumindest teilweise abgeschrägten Seiten- bzw. Randflächen angewendet. Weitere Variationen bezüglich der äusseren Gestalt liegen im Rahmen der Erfindung.

Weiter ist aus der US-PS 3 090 094 zu entnehmen, dass Filter der gleichen Gattung, wie die zur Filtration von schmelzflüssigen Metallen geeigneten Filter in Auspuffsystemen verwendet werden können. Bei dieser Anwendung wird das Filtermaterial in einen Zylinder geformt, wobei die Mantelfläche des Zylinders eine mit dem Filter integrierend gebundene Dichtung («sleeve» genannt) aufweist. Diese Dichtung besteht aus keramischem Material und wird wie der Filtereinsatz gebrannt. Eine derartige Dichtung verhindert ein seitliches Austreten von zu filtrierendem Gut, vermag jedoch nicht den Filter gegenüber einer Filteraufnahmevorrichtung abzudichten, da das keramische Material keine Rückformkraft aufweist.

Bei den bekannt gewordenen Filterelementen nach den US-PS 3 893 917, 3 947 363 und 4 081 371 wurden die Seitenflächen mit einer Dichtung oder einem abdichtenden Element versehen, das zwischen Aufnahmevorrichtung und Filterelement wirksam wird. Das abdichtende Element gewährt eine relativ leckfreie Installation der Filter und wirkt zugleich als Trennelement für eine leichte Entfernung des Filters nach dessen Gebrauch. Zusätzlich vermag das abdichtende Element den Zutritt von Metall zu den Seitenflächen der Aufnahmevorrichtung, die den Filter tragen, zu verhindern. Dadurch wird die Reinigung der Aufnahmevorrichtung stark vereinfacht und es gibt keinen Angriff durch das schmelzflüssige Metall auf die den Filter tragenden Randflächen der Aufnahmevorrichtung, was wesentlich verlängerte Standzeiten derselben bedeutet.

Ferner vermag die Dichtung durch ihre Rückformkraft solche Reibungskräfte aufzubauen, dass sich spezielle Rückhaltevorrichtungen, um den Filterkörper in der Filterkammer zu halten erübrigen.

Die sich rückformenden abdichtenden Elemente dürfen gegenüber dem schmelzflüssigen Metall nicht benetzend sein, müssen dessen chemischen Angriffen widerstehen und feuerfest genug sein, um die hohen Arbeitstemperaturen auszuhalten.

Um das zu erreichen wurden bisher die keramischen Filter mit vorgeschnittenen Streifen aus keramischem Fasermaterial niedriger Dichte und aus einem organischen Binder abgedichtet. Die gerade vorgeschnittenen Streifen wurden einfach mit Klebeband an den schrägen Seitenflächen der an sich fertigen Filterelemente fixiert.

Dieses Verfahren brachte verschiedene Nachteile. Erstens, die Dichtung war nur mit Klebeband am Filter befestigt, wobei die Dichtung nur relativ lose anlag und bei den Vorbereitungsarbeiten leicht beschädigt werden konnte. Zweitens, da die vorgeschnittenen Streifen gerade um die zu dichtenden Ecken und Seitenflächen der Filterelemente abgeschrägt sind, resultierte eine schlechte Passform und es war möglich, dass schmelzflüssiges Metall zwischen Dichtung und Filterelement durchdringen konnte. Schliesslich, da das Dichtmaterial erst nach der Hitzebehandlung des Filterelementes angebracht werden konnte, musste das Filterelement partiell verstärkt werden. D.h. zusätzliche keramische Aufschlämmung wurde an den Ecken und Seitenflächen aufgetragen, um sicherzugehen, dass die Filterkanten keine Beschädigung erlitten.

In der DE-A 2 128 316 werden Siebe mit aufgeschäumten Elastomeren als Randverstärkung und Dichtungspackung beschrieben. Dabei ist der Randbereich einer porösen Platte mit einem anderen Stoff ausgefüllt. Dieser Randbereich kann aber nicht mehr filterwirksam sein, da die Poren durch das Elastomere blockiert sind. Für die Anwendung zur Filtration von schmelzflüssigen Metallen sind Elastomere ungeeignet, da sie durch den chemischen Angriff und bei den auftretenden Temperaturen einer Zersetzung unterliegen würden.

Ziel vorliegender Erfindung ist es, die beschriebenen Nachteile zu vermeiden.

Erfindungsgemäss wird dies mit einem keramischen Filter nach Patentanspruch 1 erreicht.

Vorliegende Erfindung führt zu einem keramischen Filter, dessen, in der Regel abgeschrägte Randflächen mit einer integrierend gebundenen Dichtung versehen sind und der für die Filtration von schmelzflüssigen Metallen, insbesondere Aluminium, verwendet wird.

Die keramischen Filter mit der erfindungsgemässen integrierend gebundenen Dichtung liegen vorteilhaft in Form von Filterplatten mit zumindest teilweise abgeschrägten Randflächen vor, wobei die Dichtung an den Randflächen der Filter angebracht ist und die Dichtung auch die Einhaltung der äusseren Dimensionen der Filterplatten gewährleistet. Die gute Passform der erfindungsgemässen Filterplatten in der Aufnahmevorrichtung der Filterkammer verhindert den Durchtritt von schmelzflüssigem Metall zwischen der eigentlichen Filterplatte und den die Filter tragenden Seitenflächen der Aufnahmevorrichtung für die Filterplatten. Die gute Passform der Filterplatten in der Aufnahmevorrichtung der Filterkammer reduziert die statischen Belastungen und besonders die lokalen Überlastungen, die bei ungenauer Passform auf die Platte einwirken können.

Nach dem erfindungsgemässen Verfahren wird imprägniertes organisches Schaummaterial in eine Form, deren innere Randbegrenzungen die Grösse des endgültigen Filters aufweist, plaziert, wobei rundum zwischen der Form und den seitlichen Randflächen des imprägnierten Schaummaterials ein Zwischenraum verbleibt, der mit einer keramische Fasern enthaltende Aufschlämmung ausgefüllt und das in der Form befindliche Material getrocknet und hitzebehandelt wird.

Unter imprägniertem Schaummaterial wird ein flexibler organischer, offenzelliger Schaum verstanden, dessen freie Zwischenräume mit einer, in der Regel wässrigen, Aufschlämmung keramischen Materials vollständig gefüllt wurden und anschliessend soviel, normalerweise rund 80%, der keramischen Aufschlämmung entfernt wurde, dass die Zwischenräume im wesentlichen wieder frei sind und nur noch das organische Schaummaterial, vollständig mit Aufschlämmung bedeckt vorliegt.

Das Trocknen dient im wesentlichen dazu, den Träger der Aufschlämmung zu entfernen, bei der Hitzebehandlung wird das organische Schaummaterial zersetzt und verflüchtigt sich, währenddessen das verbleibende keramische Material unter Bildung einer chemischen oder keramischen Bindung in Form einer massgenauen Kopie des Schaummaterials erhalten bleibt.

Geeignete Imprägnier-, Trocknungs- und Hitzebehandlungsverfahren sind beispielsweise in den US-PS 3 893 917, 3 947 363 und 4 081 371 beschrieben.

Vorliegende Erfindung umfasst auch ein Verfahren, gemäss dem das imprägnierte Schaummaterial getrocknet und hitzebehandelt wird und der resultierende keramische Körper in einer Form, deren innere Randbegrenzung die Grösse des endgültigen Filters aufweist, plaziert wird, wobei rundum zwischen der Form und den seitlichen Randflächen des keramischen Körpers ein Zwischenraum verbleibt, der mit einer keramische Fasern enthaltenden Aufschlämmung ausgefüllt und getrocknet wird.

Das Herstellungsverfahren für den keramischen Körper wird beispielsweise in der genannten US-PS 3 893 917 beschrieben. Zweckmässig beträgt der Zwischenraum rundum zwischen der Form und den seitlichen Randflächen des imprägnierten Schaummaterials oder des keramischen Körpers 1 bis 7 mm, vorzugsweise 2,5 bis 3,5 mm.

Der Zwischenraum wird mit einer Aufschlämmung, enthaltend keramische Fasern, einen organischen und/oder anorganischen Binder, gegebenenfalls ein anorganisches Suspendierhilfsmittel oder ein Rheologie steuerndes Hilfsmittel und Träger, normalerweise Wasser, ausgefüllt.

Je nach Art der Aufschlämmung ist es möglich, die Form vor dem Trocknen zu entfernen. Wird eine viskose, nicht fliessende Aufschlämmung verwendet, kann die Form so entfernt werden. Bei dünnflüssigen Aufschlämmungen wird vorteilhaft eine poröse Form eingesetzt und die Form wird erst nach dem Trocknen entfernt.

Ferner ist es möglich, die Form um das Filterelement zu belassen, bis die Hitzebehandlung abgeschlossen ist. Die eingesetzten keramischen Fasern können aus Aluminiumoxid oder Zirkonoxid sein, vorzugsweise sind sie aus Aluminiumsilikat.

Zweckmässig beträgt der Durchmesser der Fasern weniger als 1 bis 10 Millimikron und die Länge der Fasern durchschnittlich 100 bis 10 000 Millimikron.

Als Binder und als Hilfsmittel können beispielsweise Methyl- oder Äthylcellulose, verschiedene Gummis, Methyl- oder Äthylsilikate, kolloidales Siliciumoxid, Lehme oder andere organische, anorganische oder organometallische Materialien eingesetzt werden.

Die Aufschlämmung enthält zweckmässig mehr als 90 Gew.-% Aluminiumsilikatfasern, 0 bis 5 Gew.-% eines organischen Binders, 0 bis 5 Gew.-% eines anorganischen Binders und 0 bis 5 Gew.-% eines organischen Suspensionshilfsmittels oder eines Rheologie steuernden Hilfsmittels. Beispielsweise kann eine Aufschlämmung, enthaltend 95,5 Gew.-% Aluminiumsilikatfasern, 1,5 Gew.-% Gummi, 1,5 Gew.-% kolloidale Kieselsäure und 1,5 Gew.-% Bentonit, eingesetzt werden. Die Dichten des fertigen Dichtungsmaterials liegen im Bereich von 64 kg/m³ bis 240 kg/m³. Allgemein sind Dichten unter 64 kg/m³ weniger geeignet, da derartiges Dichtungsmaterial im Gebrauch zu nachgiebig wäre und Dichtungsmaterial mit Dichten von mehr als 240 kg/m³ würde so steif, dass ein sauberes Anpassen des Filterelementes an den Sitz in der Filterkammer nicht erzielt würde.

Die vorliegende Erfindung führt zu keramischen Filtern, vorzugsweise in Form von Filterplatten, die mit einer integrierend gebundenen Dichtung an deren Randfläche ausgestattet sind.

Zum Gebrauch werden die Filter in eine Filterkammer eingesetzt. Die Filterkammer enthält eine Aufnahmevorrichtung für die Filterplatten in Form einer Öffnung mit abgeschrägten Seitenflächen, die in Neigung und Grösse den Randflächen des Filterelementes entsprechen. Durch das Anbringen der integrierend gebundenen Dichtung am keramischen Filter gemäss vorliegender Erfindung entfällt die übliche Randverstärkung, die äusseren Seitenbegrenzungen des Filterelementes werden durch die Begrenzungen der Form bestimmt und nicht mehr durch den keramischen Körper selbst. Auch ist die Dichtung vor dem Gebrauch schon hitzebehandelt. Dadurch, dass das Aufbringen der Randverstärkung entfällt, vereinfacht sich das Herstellungsverfahren. Mit der Verwendung einer Form, und insbesondere durch deren gegebene innere Begrenzungen der Randfläche, ergeben sich Filter, deren gleichmässige Randflächen einen Sitz auf den entsprechenden Randflächen der Filterkammer gewährleisten und die Möglichkeit eines Durchdringens von Metall zwischen Filter und Filterkammer verunmöglichen. Ebenso wird eine einseitige Belastung des Filters in seinem Sitz durch unebenes Aufliegen vermieden. Schliesslich reduziert die Hitzebehandlung des Filters zusammen mit der Dichtung die Möglichkeit, dass sich durch Gasbildung durch die Dichtung während der Filtration das Metall wieder verunreinigt. Dieser Vorteil wird auch erreicht, wenn Filter und integrierend gebundene Dichtung in der Filterkammer vor der Metallfiltration ungenügend vorgeheizt wurden.

Das Herstellungsverfahren erlaubt es, die erfindungsgemäss vorgeschlagenen Filterelemente leicht und einfach in verschiedensten Variationen herzustellen. Zum Beispiel eignet sich der erfindungsgemässe Keramikfilter und dessen Herstellungsverfahren zur Herstellung von Filtern mit den Eigenschaften, wie sie in der US-PS 3 962 081 beansprucht sind. Vorliegende Erfindung lässt sich auch für Filterelemente mit weiteren Variationen bezüglich der Luftdurchlässigkeit, der Porosität, der Porengrösse und der Dicke der Filterelemente anwenden.

**Patentansprüche**

1. Keramischer Filter zur Filtration von schmelzflüssigen Metallen, hergestellt durch Imprägnieren eines flexiblen organischen Schaummaterials mit einer wässrigen Aufschlämmung keramischen Materials, Trocknen des imprägnierten Schaummaterials, Erwärmen, um das organische Schaummaterial zu entfernen und anschliessendem Hitzebehandeln oder Sintern des resultierenden keramischen Körpers, dadurch gekennzeichnet, dass der Filter an den Randflächen eine mit dem Filter integrierend gebundene gegen das schmelzflüssige Metall mechanisch und chemisch beständige, keramische Fasern enthaltende sich rückformende Dichtung mit einer Dichte des fertigen Dichtungsmaterials im Bereich von 64 kg/m³ bis 240 kg/m³, aufweist.

2. Verfahren zur Herstellung keramischer Filter nach Anspruch 1, dadurch gekennzeichnet, dass das imprägnierte organische Schaummaterial in einer Form, deren innere Randbegrenzungen die Grösse des endgültigen Filters aufweisen, plaziert wird, wobei zwischen der Form und den seitlichen Randflächen des imprägnierten Schaummaterials ein Zwischenraum verbleibt, der mit einer keramischen Fasern enthaltenden Aufschlämmung ausgefüllt und das in der Form befindliche Material getrocknet und hitzebehandelt wird, wobei ein keramischer Filter mit integrierend gebundener Dichtung an den Randflächen gebildet wird.

3. Verfahren nach Anspruch 2, dadurch gekennzeichnet, dass imprägniertes getrocknetes und hitzebehandeltes Schaummaterial in einer Form, welche die Grösse des endgültigen Filters aufweist, plaziert wird, wobei rundum zwischen der Form und den seitlichen Randflächen des keramischen Körpers ein Zwischenraum verbleibt, der mit einer keramischen Fasern enthaltenden Aufschlämmung ausgefüllt und getrocknet wird.

4. Verfahren nach Anspruch 2 und 3, dadurch gekennzeichnet, dass der Zwischenraum rundum zwischen den inneren Begrenzungen der Form und den seitlichen Randflächen des imprägnierten Schaummaterials oder dem keramischen Körper 1 bis 7 mm, vorzugsweise 2,5 bis 3,5 mm, betragen.

5. Verfahren nach Anspruch 2 bis 4, dadurch gekennzeichnet, dass die Form vor dem Trocknen entfernt wird.

6. Verfahren nach Anspruch 2 bis 4, dadurch gekennzeichnet, dass die Form nach der Hitzebehandlung entfernt wird.

7. Verfahren nach Anspruch 2 und 4, dadurch gekennzeichnet, dass die Form nach der Hitzebehandlung entfernt wird.

**Revendications**

1. Filtre céramique pour la filtration de métaux en fusion, fabriqué par imprégnation d'un matériau mousse organique souple avec une suspension aqueuse de matériau céramique, séchage du matériau mousse imprégné, chauffage, pour enlever le matériau mousse organique puis traitement thermique ou frittage du corps céramique résultant, caractérisé en ce que le filtre présente aux surfaces de bordure une garniture d'étanchéité liée et intégrée, stable mécaniquement et chimiquement à l'égard du métal en fusion, contenant des fibres céramiques, retrouvant sa forme après déformation et d'une densité de matériau fini de garniture d'étanchéité sur la plage de 64 kg/m³ à 240 kg/m³.

2. Procédé pour la fabrication de filtre céramique selon la revendication 1, caractérisé en ce que l'on place le matériau mousse organique imprégné dans un moule dont les limites internes de bordure ont la dimension du filtre définitif, étant précisé qu'entre le moule et les surfaces latérales de bordure du matériau mousse imprégné subsiste un espace interne que l'on remplit d'une suspension contenant des fibres céramiques et que l'on sèche et traite à la chaleur le matériau qui se trouve dans le moule, ce par quoi est formé un filtre céramique à garniture d'étanchéité liée et intégrée aux surfaces de bordure.

3. Procédé selon la revendication 2, caractérisé en ce que l'on place le matériau mousse imprégné, séché et traité à la chaleur dans un moule qui présente la dimension du filtre définitif, étant précisé que tout autour, entre le moule et les surfaces latérales de bordure du corps céramique subsiste un espace intermédiaire que l'on remplit d'une suspension contenant des fibres céramiques et que l'on sèche.

4. Procédé selon les revendications 2 et 3, caractérisé en ce que l'espace intermédiaire, tout autour, entre les limites internes du moule et les surfaces latérales de bordure du matériau mousse imprégné ou du corps céramiques atteint 1 à 7 mm, de préférence 2,5 à 3,5 mm.

5. Procédé selon les revendications 2 à 4, caractérisé en ce que l'on enlève le moule avant le séchage.

6. Procédé selon les revendications 2 à 4, caractérisé en ce que l'on enlève le moule après le traitement à la chaleur.

7. Procédé selon les revendications 2 et 4, caractérisé en ce que l'on enlève le moule après le traitement à la chaleur.

### Claims

1. Ceramic filter for the filtration of molten metals, produced by impregnation of a flexible organic foam material with an aqueous slurry of ceramic material, drying of the impregnated foam material, heating in order to remove the organic foam material and subsequent heat treatment or sintering of the resultant ceramic body, characterised in that the filter comprises on the marginal surfaces a back-forming seal integrally bonded with the filter, mechanically and chemically stable to the molten metal and containing ceramic fibres, with a density of the final seal material in the range of 64 kg./cu.m. to 240 kg./cu.m.

2. Process for the production of ceramic filters according to Claim 1, characterised in that the impregnated organic foam material is placed in a mould, the inner marginal limitations of which possess the size of the final filter, while between the mould and the lateral marginal surfaces of the impregnated foam material an interspace remains which is filled with a slurry containing ceramic fibres and the material situated in the mould is dried and heat-treated, a ceramic filter with integrally bonded seal on the marginal surfaces being formed.

3. Process according to Claim 2, characterised in that impregnated, dried and heat-treated foam material is placed in a mould having the size of the final filter, and all round between the mould and the laterial marginal surfaces of the ceramic body an interspace remains which is filled out with a slurry containing ceramic fibres, and dried.

4. Process according to Claims 2 and 3, characterised in that the interspace all round between the inner limitations of the mould and the lateral marginal surfaces of the impregnated foam material or the ceramic body amounts to 1 to 7 mm., preferably 2.5 to 3.5 mm.

5. Process according to Claims 2 to 4, characterised in that the mould is removed before drying.

6. Process according to Claims 2 to 4, characterised in that the mould is removed after the heat treatment.

7. Process according to Claims 2 and 4, characterised in that the mould is removed after the heat teatment.